# EUROPÄISCHE PATENTSCHRIFT

(11) **EP 3 847 413 B1**
(45) Veröffentlichungstag und Bekanntmachung des Hinweises auf die Patenterteilung: **25.10.2023**
(21) Anmeldenummer: 19758949.2
(22) Anmeldetag: 22.08.2019
(51) Int. Cl.: G01B 5/00, G01B 5/255, G01B 11/275, G01B 21/26

(54) **RADHALTER**
WHEEL CLAMP
SUPPORT DE ROUE

(30) Priorität: 06.09.2018 DE 102018215157
(43) Veröffentlichungstag der Anmeldung: 14.07.2021
(73) Patentinhaber: Beissbarth Automotive Testing Solutions GmbH, 80993 München (DE)
(72) Erfinder: PETERS, Stefanie, 64289 Darmstadt (DE); ILCHEV, Trendafil, 81369 München (DE); WAGMANN, Christian, 80538 München (DE); HOFMANN, Claudia, 81549 München (DE)
(74) Vertreter: Schmitt-Nilson Schraud Waibel Wohlfrom Patentanwälte Partnerschaft mbB
(86) Internationale Anmeldenummer: PCT/EP2019/072438
(87) Internationale Veröffentlichungsnummer: WO 2020/048780

(56) Entgegenhaltungen:
- WO-A1-2017/093922
- DE-B3- 10 242 536
- FR-A1- 3 016 691

## Beschreibung

Die Erfindung betrifft einen Radhalter, insbesondere einen Radhalter zur Fahrzeugvermessung, und ein Verfahren des Montierens eines solchen Radhalters an einem Rad eines Fahrzeugs, insbesondere eines Kraftfahrzeugs.

### Stand der Technik

Zur Fahrwerksvermessung werden häufig Radhalter, die Sensoren und/oder Messmarken ("Targets") tragen können, an den Rädern des zu vermessenden Fahrzeugs montiert.

Beispiele für derartige Radhalter werden in den Dokumenten DE 102 42 536 B3, FR 3 016 691 A1 und WO 2017/093922 A beschrieben.

Die Handhabung solcher Radhalter, insbesondere ihre Montage und Demontage an bzw. von den Rädern des Fahrzeugs, ist aufwändig und schwierig. Insbesondere sind dabei mehrere Arbeitsschritte erforderlich, die mit zwei Händen durchgeführt werden müssen. Es besteht die Gefahr, dass die Messergebnisse der Fahrwerksvermessung durch eine fehlerhafte und/oder ungenaue Montage der Radhalter verfälscht werden.

Es ist eine Aufgabe der Erfindung, die Montage und Demontage eines Radhalters an den Rädern eines Fahrzeugs zu vereinfachen und die Gefahr einer fehlerhaften und/oder ungenauen Montage zu reduzieren.

### Offenbarung der Erfindung

Ein erfindungsgemäßer Radhalter zur Befestigung an einem Rad, insbesondere an einem Rad eines Kraftfahrzeugs, hat wenigstens zwei Arme, die sich von einem Zentrum des Radhalters in radialer Richtung nach außen erstrecken, und ein zentrales Rotationselement, das rotierbar im Zentrum des Radhalters angeordnet ist. Jeder der Arme weist jeweils ein stationäres inneres Element und wenigstens ein bewegliches äußeres Element auf, das gegenüber dem jeweiligen inneren Element in radialer Richtung beweglich ist, so dass die Länge jedes Armes durch Bewegen der beweglichen Elemente in radialer Richtung variiert werden kann. Der Radhalter hat darüber hinaus wenigstens zwei Koppelelemente, die sich jeweils derart zwischen einem der beweglichen Elemente und dem zentralen Rotationselement erstrecken, dass die beweglichen Elemente durch Rotieren des Rotationselements in radialer Richtung bewegt werden können, wodurch die Länge der Arme in radialer Richtung durch Bewegen der beweglichen Elemente variierbar ist. Das Rotationselement ist derart mit einem spiralförmig um die Rotationsachse des Rotationselements ausgebildeten elastischen Element gekoppelt, dass das elastische Element eine elastische Kraft auf das Rotationselement ausübt, welche die beweglichen Elemente über das Rotationselement und die Kopplungselemente in Richtung auf das Zentrum des Radhalters drückt.

Ausführungsbeispiele der Erfindung umfassen auch ein Verfahren des Montierens eines Radhalters gemäß einem Ausführungsbeispiel der Erfindung an einem Rad, insbesondere an einem Rad eines Kraftfahrzeugs. Dabei umfasst das Verfahren, die beweglichen Elemente gegen die elastische Kraft des elastischen Elements in radialer Richtung nach außen zu bewegen, um die Armlängen der Arme zu vergrößern; den Radhalter auf ein Rad, insbesondere ein Rad eines Kraftfahrzeugs, aufzubringen; und die beweglichen Elemente durch Rotieren des Rotationselements, angetrieben von der elastischen Kraft des elastischen Elements, in Richtung auf das Zentrum zu bewegen, um die Armlängen der Arme zu verringern und den Radhalter so an dem Rad zu fixieren.

Die Länge der Arme eines Radhalters gemäß einem Ausführungsbeispiel der Erfindung kann durch Drehen des zentralen Rotationselements einfach variiert werden, um den Radhalter an einem Rad zu fixieren bzw. von dem Rad zu lösen. Die Handhabung des Radhalters kann dadurch erheblich vereinfacht werden. Ein erfindungsgemäßer Radhalter kann daher mit hoher Genauigkeit am Rad ausgerichtet, insbesondere auf der Radachse zentriert, werden. Ein erfindungsgemäßer Radhalter ist für Rechts- und Linkshänder gleichermaßen gut geeignet. Dadurch, dass das elastische Element spiralförmig um die Rotationsachse des Rotationselements ausgebildet ist, kann ein effizientes elastisches Element zur Verfügung gestellt werden, das einen geringen Platzbedarf hat.

In einer Ausführungsform erstrecken sich die Arme in einer gemeinsamen Ebene und das Rotationselement ist um eine Achse rotierbar, die orthogonal zur gemeinsamen Ebene der Arme ausgerichtet ist. Die Koppelelemente erstrecken sich dabei im Wesentlichen parallel zur gemeinsamen Ebene der Arme. Eine derartige Anordnung ermöglicht einen besonders kompakten Aufbau des Radhalters.

In einer Ausführungsform hat das Rotationselement einen zentralen Bereich und wenigstens zwei Rotationselementarme und jedes der Kopplungselemente ist mit einem der Arme verbunden. Durch ein mit Rotationselementarmen ausgebildetes Rotationselement kann mit geringem Materialeinsatz eine mechanische Übersetzung realisiert werden, um die Wege, über die sich die beweglichen Elemente bewegen, wenn das Rotationselement um einen vorgegebenen Winkel rotiert wird, zu vergrößern.

In einer Ausführungsform sind die Kopplungselemente jeweils schwenkbar mit dem Rotationselement und den beweglichen Elementen verbunden, um eine effiziente Kraftübertragung von dem Rotationselement auf die beweglichen Elemente zu ermöglichen.

In einer Ausführungsform hat der Radhalter drei Arme, die es ermöglichen, den Radhalter sicher an einem Rad zu befestigen.

Ein Ausführungsbeispiel eines erfindungsgemäßen Radhalters wird im Folgenden unter Bezugnahme auf die beigefügten Figuren näher beschrieben.

### Kurze Beschreibung der Figuren

Figur 1 zeigt eine schematische Darstellung eines Rades mit einem an dem Rad montierten Radhalter.
Die Figuren 2 und 3 zeigen jeweils eine perspektivische Ansicht eines Radhalters gemäß einem Ausführungsbeispiel der Erfindung.
Figur 4 zeigt ein Ausführungsbeispiel eines rotationselastischen Elements in einer perspektivischen schematischen Darstellung.
Figur 5 zeigt das rotationselastische Element im eingebauten Zustand.
Figur 6 zeigt eine vergrößerte Ansicht eines Verriegelungsmechanismus gemäß einem Ausführungsbeispiel der Erfindung.
Figur 7 zeigt ein erstes Ausführungsbeispiel eines Verriegelungsgriffs gemäß einem Ausführungsbeispiel der Erfindung.
Figur 8 zeigt ein zweites Ausführungsbeispiel eines Verriegelungsgriffs gemäß einem Ausführungsbeispiel der Erfindung.

### Figurenbeschreibung

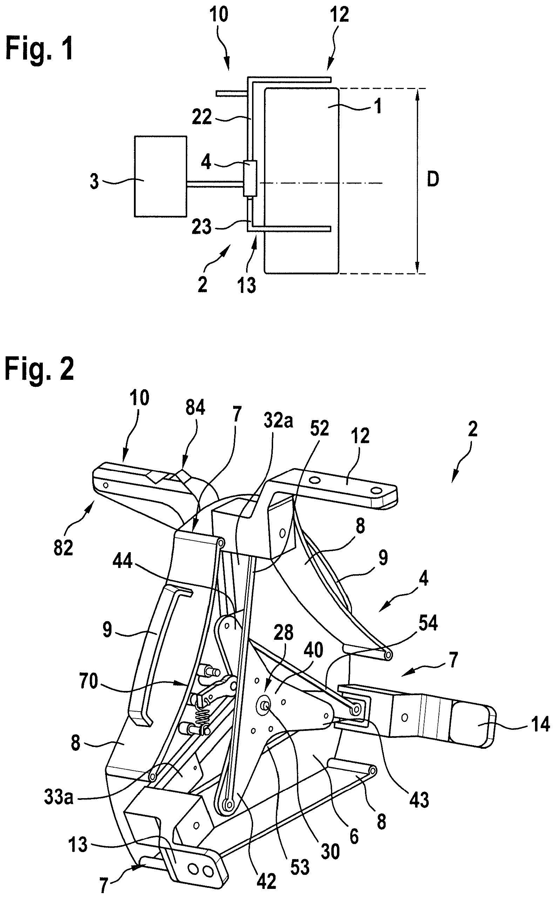

Die Figur 1 zeigt eine schematische Darstellung eines Rades 1 mit einem an dem Rad 1 montierten Radhalter 2, an dem ein Target 3 angebracht ist.

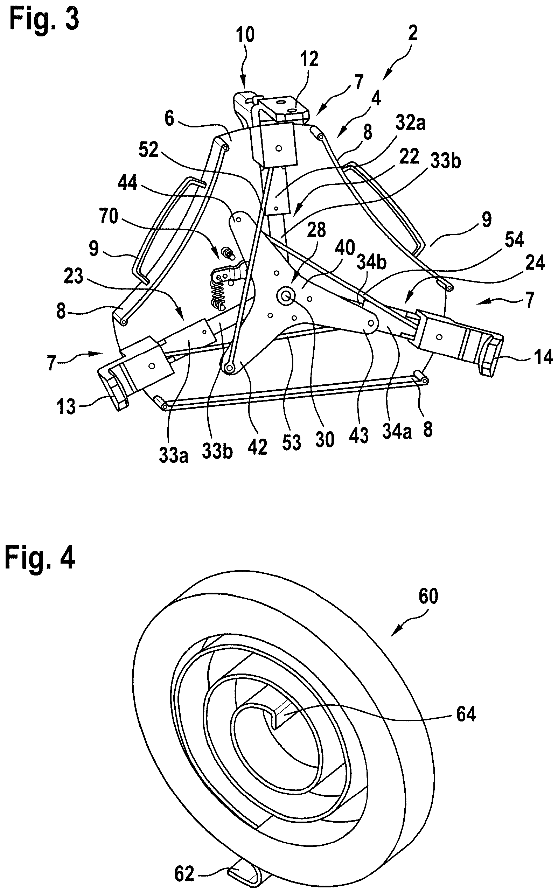

Die Figuren 2 und 3 zeigen jeweils eine perspektivische Ansicht eines Radhalters 2 gemäß einem Ausführungsbeispiel der Erfindung.

Der Radhalter 2 hat ein Gehäuse 4 mit einer Grundplatte 6 und drei Seitenwänden 8, die sich orthogonal von den Rändern Grundplatte 6 in die gleiche Richtung erstrecken. Der Radhalter 2 hat mehrere Tragegriffe 9, 10, welche die Handhabung des Radhalters 2 erleichtern.

Eine zentrale Achse 30 erstreckt sich orthogonal zur Grundplatte 6 durch einen zentralen Bereich (Zentrum) 28 der Grundplatte 6. Drei Arme 22, 23, 24 erstrecken sich vom Zentrum 28 der Grundplatte 6 ausgehend durch Öffnungen 7, die zwischen den Seitenwänden 8 ausgebildet sind, in radialer Richtung nach außen. Die Arme 22, 23, 24 erstrecken sich im Wesentlichen parallel zur Ebene der Grundplatte 6.

Die Arme 22, 23, 24 umfassen jeweils ein zentrumsnahes stationäres inneres Element 32b, 33b, 34b und ein bewegliches äußeres Element 32a, 33a, 34a, das entlang des jeweiligen inneren Elements 32b, 33b, 34b in radialer Richtung verschiebbar ist. Die Länge der Arme 22, 23, 24 in radialer Richtung kann so durch Bewegen, insbesondere Verschieben, der äußeren Elemente 32a, 33a, 34a entlang der inneren Elemente 32b, 33b, 34b variiert werden.

An den äußeren, von der zentralen Achse 30 abgewandten, Enden der äußeren Elemente 32a, 33a, 34a sind Klauen 12, 13, 14 ausgebildet, die sich im Wesentlichen rechtwinklig zu den Armen 22, 23, 24 erstrecken. Die Klauen 12, 13, 14 sind dazu ausgebildet, auf der Lauffläche eines in den Figuren 2 und 3 nicht gezeigten Rades 1 aufzuliegen, wenn der Radhalter 2 an einem Rad 1 angebracht ist (siehe Figur 1).

Durch Bewegen der äußeren Elemente 32a, 33a, 34a in radialer Richtung nach außen kann die Länge der Arme 22, 23, 24 verlängert werden, damit der Radhalter 2 einfach in Axialrichtung des Rades 1 auf das Rad 1 aufgebracht werden kann. Durch Bewegen der äußeren Elemente 32a, 33a, 34a nach innen können die Armlängen verkürzt werden, um den Radhalter 2 am Rad 1 zu fixieren, wie es in der Figur 1 gezeigt ist.

Ein Radhalter 2 gemäß einem Ausführungsbeispiel der Erfindung umfasst darüber hinaus ein zentrales Rotationselement 40, das so auf der zentralen Achse 30 im Zentrum 28 der Grundplatte 6 angebracht ist, dass es um die zentrale Achse 30 rotierbar ist. Das Rotationselement 40 erstreckt sich in einer Ebene, die im Wesentlichen parallel zur Ebene der Grundplatte 6 ausgerichtet ist.

Jedes der beweglichen Elemente 32a, 33a, 34a ist durch jeweils ein Kopplungselement 52, 53, 54 mit dem Rotationselement 40 verbunden. Die Kopplungselemente 52, 53, 54 sind jeweils beweglich mit dem Rotationselement 40 und den beweglichen Elementen 32a, 33a, 34a verbunden, so dass die Kopplungselemente 52, 53, 54 gegenüber dem Rotationselement 40 und den beweglichen Elementen 32a, 33a, 34a in einer Ebene, die sich parallel zur Ebene der Grundplatte 6 erstreckt, schwenkbar sind.

Die Kopplungselemente 52, 53, 54 transformieren eine Rotationsbewegung des Rotationselements 40 um die zentrale Achse 30 in Translationsbewegungen der beweglichen Elemente 32a, 33a, 34a in radialer Richtung. Die beweglichen Elemente 32a, 33a, 34a können so durch Drehen des Rotationselements 40 um die zentrale Achse 30 in radialer Richtung entlang der inneren Elemente 32b, 33b, 34b bewegt werden, um die Länge der Arme 22, 23, 24 zu variieren.

Durch das Rotationselement 40 und die Kopplungselemente 52, 53, 54 sind die beweglichen Elemente 32a, 33a, 34a der Arme 22, 23, 24 so miteinander gekoppelt, dass sich alle beweglichen Elemente 32a, 33a, 34a synchron miteinander bewegen, wenn eines der beweglichen Elemente 32a, 33a, 34a bewegt wird. Der durch den Abstand zwischen den Krallen 12, 13, 14 definierte Durchmesser des Radhalters 2 kann daher durch Bewegen eines der beweglichen Elemente 32a, 33a, 34a auf einfache Weise so voreingestellt werden, dass der Radhalter 2 einfach, insbesondere mit nur einer Hand, auf ein Rad 1 aufgebracht werden kann.

In dem in den Figuren 2 und 3 gezeigten Ausführungsbeispiel sind die Kopplungselemente 52, 53, 54 als Kopplungsstangen ausgebildet. Die Kopplungselemente 52, 53, 54 können auch eine andere Form haben, solange sie die zuvor beschriebene Funktion erfüllen, eine Rotationsbewegung des Rotationselements 40 in Translationsbewegungen der beweglichen Elemente 32a, 33a, 34a zu transformieren.

In dem in den Figuren 2 und 3 gezeigten Ausführungsbeispiel ist das Rotationselement 40 mit drei Rotationselementarmen (Vorsprüngen) ausgebildet, die sich von einem zentralen Bereich des Rotationselements 40 an der zentralen Achse 30 in radialer Richtung nach außen erstrecken. Die Kopplungselemente 52, 53, 54 sind jeweils schwenkbar mit einem der äußeren Bereiche der Rotationselementarme verbunden. Durch eine derartige Ausgestaltung des Rotationselements 40 kann mit geringem Materialeinsatz eine mechanische Übersetzung realisiert werden, welche die Wegstrecke, über die sich die beweglichen Elemente 32a, 33a, 34a in radialer Richtung bewegen, wenn das Rotationselement 40 um einen vorgegebenen Winkel um die zentrale Achse 30 rotiert wird, vergrößert.

Die in den Figuren gezeigten Rotationselementarme / Vorsprünge des Rotationselements 40 sind aber kein notwendiges Merkmal der Erfindung. Das Rotationselement 40 kann beispielsweise auch als runde, insbesondere als kreisförmige oder elliptische, Scheibe oder als eckige, z.B. als drei- oder viereckige, Scheibe, ausgebildet sein.

Das Rotationselement 40 wird durch ein rotationselastisches Element 60 (siehe Figur 4) so vorgespannt, dass die beweglichen Elemente 32a, 33a, 34a von den Koppelelementen 52, 53, 54 "nach innen", d.h. in Richtung auf die zentrale Achse 30 gezogen werden. Das rotationselastische Element 60 ist in den Figuren 2 und 3 nicht sichtbar, da es zwischen der Grundplatte 6 und dem Rotationselement 40 angeordnet ist und von dem Rotationselement 40 verdeckt wird.

Figur 4 zeigt ein Ausführungsbeispiel eines rotationselastischen Elements 60 in einer perspektivischen schematischen Darstellung.

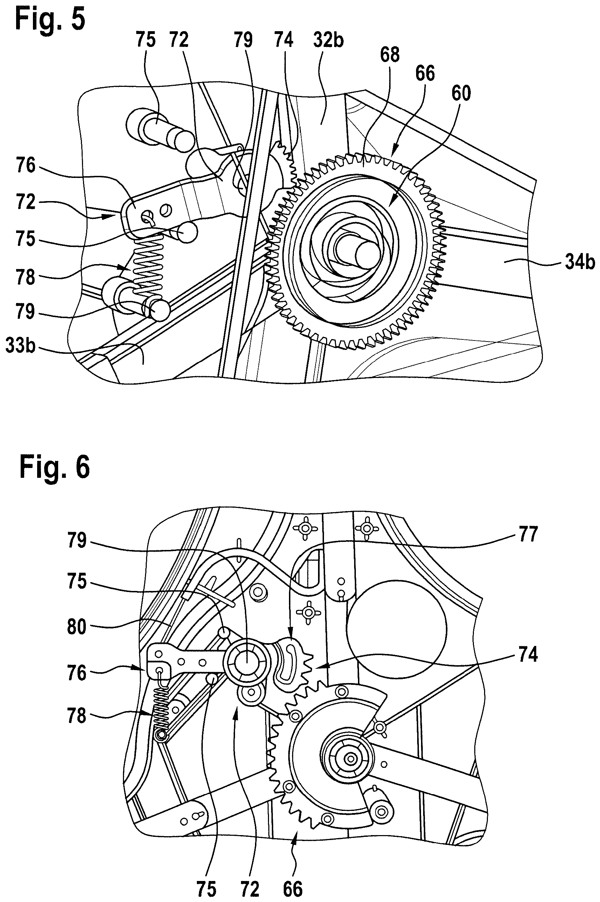

Figur 5 zeigt das rotationselastische Element 60 im eingebauten Zustand. In der Figur 5 ist das Rotationselement 40 nicht dargestellt, um einen freien Blick auf das rotationselastische Element 60 zu ermöglichen.

In dem in den Figuren 4 und 5 gezeigten Ausführungsbeispiel ist das rotationselastische Element 60 als Spiralfeder 60 ausgebildet, die sich von der Achse 30 ausgehend spiralförmig nach außen erstreckt.

Abgebogene Enden 62, 64 der Spiralfeder 60 sind mit dem Rotationselement 40 bzw. mit der Achse 30 oder der Grundplatte 6 verbunden, so dass das Rotationselement 40 die Spiralfeder 60 spannt bzw. entspannt, wenn es um die Achse 30 rotiert wird.

Das rotationselastische Element 60 ist dabei so ausgebildet und montiert, dass es das Rotationselement 40 derart antreibt, dass die beweglichen Elemente 32a, 33a, 34a durch das rotationselastische Element 60 in Richtung auf das Zentrum 28 gezogen werden. Dadurch wird die Länge der Arme 22, 23, 24 minimiert, und der Radhalter 2 wird durch die elastische Spannkraft des rotationselastischen Elements 60, die über das Rotationselement 40, die Koppelelemente 52, 53, 54 und die beweglichen Elemente 32a, 33a, 34a auf die Klauen 12, 13, 14 übertragen wird, an dem Rad 1 fixiert.

Die beweglichen Elemente 32a, 33a, 34a können gegen die Kraft des rotationselastischen Elements 60 mit Muskelkraft nach außen bewegt werden, um die Arme 22, 23, 24 zu verlängern, damit der Radhalter 2 bequem auf das Rad 1 aufgebracht oder von diesem entfernt werden kann. Durch die von dem rotationselastischen Element 60 erzeugte elastischen Kraft passt sich der Radhalter 2 in Rahmen des Bewegungsspielraumes (der maximalen Weglänge) der äußeren Elemente 32a, 33a, 34a in radialer Richtung automatisch an unterschiedliche Größen (Durchmesser D) des Rades 1 an. Ein erfindungsgemäßer Radhalter 2 kann daher einfach an Rädern 1 unterschiedlicher Größen montiert werden.

Am äußeren Umfang eines ringförmigen verzahnten Elements 68, welches das rotationselastische Element 60 umgibt, ist eine Außenverzahnung 66 ausgebildet. Das verzahnte Element 68 ist rotationsfest mit dem Rotationselement 40 verbunden, so dass das verzahnte Element 68 und das Rotationselement 40 nur gemeinsam um die zentrale Achse 30 rotieren können.

Die Außenverzahnung 66 kann über den gesamten äußeren Umfang des verzahnten Elements 68 (siehe Figur 5) oder nur über einen Teilbereich des äußeren Umfangs des verzahnte Elements 68 (siehe Figur 6) ausgebildet sein.

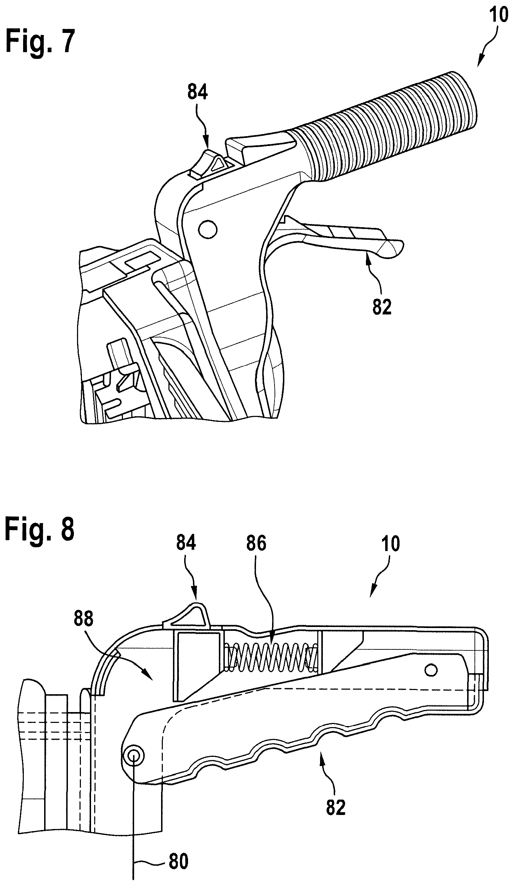

Das verzahnte Element 68 mit der Außenverzahnung 66 ist Teil einer Verriegelungsvorrichtung 70, die im Folgenden unter Bezugnahme auf die Figuren 6 und 7 näher beschrieben wird.

Die Verriegelungsvorrichtung 70 umfasst neben dem verzahnten Element 68 einen Verriegelungsmechanismus 72, der schwenkbar an einer Verriegelungsmechanismus-Achse 79 angebracht ist, die sich orthogonal von der Grundplatte 6 des Radhalters 2 erstreckt.

Der Verriegelungsmechanismus 72 ist in einer Ebene schwenkbar, die parallel zur Grundplatte 6 ausgerichtet ist. Der Schwenkbereich des Verriegelungsmechanismus 72 wird durch zwei Begrenzungselemente (Begrenzungsbolzen) 75 begrenzt.

An einem, in den Figuren 5 und 6 rechts dargestellten, ersten Ende weist der Verriegelungsmechanismus 72 eine Verzahnung 74 auf, deren Parameter mit den Parametern der Außenverzahnung 66 des verzahnte Elements 68 korrespondieren, so dass die Verzahnung 74 des Verriegelungsmechanismus 72 mit der Außenverzahnung 66 in Eingriff gebracht werden kann.

An einem gegenüberliegenden, in den Figuren 5 und 6 links dargestellten, zweiten Ende 76 ist der Verriegelungsmechanismus 72 mit einem ersten Federelement 78 gekoppelt. Das erste Federelement 78 ist über einen Federelement-Bolzen 79 an der Grundplatte 6 befestigt. Das erste Federelement 78 ist ausgebildet, den Verriegelungsmechanismus 72 in die in den Figuren 5 und 6 gezeigte Ausgangsposition zu ziehen.

Wenn sich der Verriegelungsmechanismus 72 in der Ausgangsposition befindet, greift die Verzahnung 74 des Verriegelungsmechanismus 72 nicht in die Außenverzahnung 66 des verzahnten Elements 68 ein. Folglich kann das Rotationselement 40 rotieren und die mit dem Rotationselement 40 gekoppelten äußeren Elemente 32a, 33a, 34a sind in radialer Richtung frei bewegbar.

Aufgrund der durch die Kopplungselemente 52, 53, 54 und das Rotationselement 40 hergestellten Kopplung bewegen sich die äußeren Elemente 32a, 33a, 34a synchron miteinander. Der Abstand der Krallen 12, 13, 14 vom Zentrum, der den halben Durchmesser (Radius) des Radhalters 2 definiert, kann daher einfach an den Durchmesser D des Rades 1 angepasst werden, an dem der Radhalter 2 angebracht werden soll.

An dem zweiten Ende 76 des Verriegelungsmechanismus 72 ist auch ein Drahtzug (Bowdenzug) 80 angebracht, der es ermöglicht, den Verriegelungsmechanismus 72 durch Betätigen eines Verriegelungselements 82 (siehe Figuren 7 und 8) um die Verriegelungsmechanismus-Achse 79 aus der in der Figur 6 gezeigten Ausgangsposition in eine Verriegelungsposition zu schwenken, in der die Verzahnung 74 des Verriegelungsmechanismus 72 in die Außenverzahnung 66 des verzahnten Elements 68 eingreift. Durch diesen Eingriff wird eine Rotation des Rotationselements 40 verhindert. Dadurch sind die äußeren Elemente 32a, 33a, 34a der Arme 22, 23, 24, die durch die Koppelelemente 52, 53, 54 mit dem Rotationselement 40 gekoppelt sind, nicht mehr in radialer Richtung beweglich und fixieren den Radhalter 2 sicher am Rad 1.

Anstelle eines Drahtzuges 80 kann auch eine (in den Figuren nicht gezeigte) Hydraulik vorgesehen sein, die es ermöglicht, den Verriegelungsmechanismus 72 durch Betätigen des Verriegelungselements 82 von der Ausgangsposition in die Verriegelungsposition zu bewegen.

Aufgrund eines zwischen der Verzahnung 74 und der Verriegelungsmechanismus-Achse 79 im Verriegelungsmechanismus 72 ausgebildeten Freiraumes 77 ist die Verzahnung 74 elastisch. Durch dieser Elastizität kann ein Zahn der Verzahnung 74, der bei einer ungünstigen relativen Positionierung der Verzahnung 74 und der Außenverzahnung 66 zu einer Blockade führen könnte, etwas zurückweichen und in eine benachbarte Zahnlücke der Außenverzahnung 66 rutschen. Eine unerwünschte Blockade zwischen der Verzahnung 74 des Verriegelungsmechanismus 72 und der Außenverzahnung 66 des verzahnten Elements 68 kann so verhindert werden. Eine Blockade zwischen der Verzahnung 74 des Verriegelungsmechanismus 72 und der Außenverzahnung 66 könnte dazu führen, dass der Verriegelungsmechanismus 72 nicht aus der Ausgangsposition in die Verriegelungsposition geschwenkt werden kann.

Der Verriegelungsmechanismus 72 und die Außenverzahnung 66 des verzahnten Elements 68 können aus Metall und/oder aus Kunststoff gefertigt sein.

Die Figuren 7 und 8 zeigen zwei verschiedene mögliche Ausführungsbeispiele eines Verriegelungselements 82, das zum Bewegen des Verriegelungsmechanismus 72 an/in einem Tragegriff 10 des Radadapters 2 ausgebildet ist.

In dem in der Figur 8 gezeigten Tragegriff 10 ist ein zweites Federelement 86 vorgesehen, das ausgebildet ist, das Verriegelungselement 82 in eine Ausgangsposition zu drücken, in der sich der über den Drahtzug 80 mit dem Verriegelungselement 82 gekoppelte Verriegelungsmechanismus 72 in seiner Ausgangsposition befindet. Wenn der Verriegelungsmechanismus 72 in seiner Ausgangsposition angeordnet ist, ist die Verzahnung 74 des Verriegelungsmechanismus 72 nicht im Eingriff mit der Außenverzahnung 66 des verzahnte Elements 68.

Durch Betätigen (Anziehen) des Verriegelungselements 82 wird der Verriegelungsmechanismus 72 über den Drahtzug 80 aus der Ausgangsposition in die Eingriffsposition bewegt. Dabei wird seine Verzahnung 74 in Eingriff mit der Außenverzahnung 66 des verzahnten Elements 68 gebracht, wodurch eine zusätzliche mechanische Spannung auf die beweglichen äußeren Elemente 32a, 33a, 34a aufgebracht und ein weiteres Rotieren des Rotationselements 40 verhindert wird, um den Radhalter 2 sicher an dem Rad 1 zu befestigen.

Durch einen in dem Tragegriff 10 ausgebildeten Verriegelungselement-Fixiermechanismus 88 ist das Verriegelungselement 82 in der betätigten Position, in der sich der Verriegelungsmechanismus 72 in seiner Eingriffsposition befindet, fixierbar. Wenn das Verriegelungselement 82 in der betätigten Position fixiert ist, wird ein Rotieren des Rotationselements 40 durch den Eingriff der Verzahnung 74 des Verriegelungsmechanismus 72 in die Außenverzahnung 66 des verzahnte Elements 68 verhindert, d.h. das Rotationselement 40 bleibt blockiert, auch wenn die Hand des Bedieners vom Verriegelungselement 82 entfernt wird.

Durch Betätigen eines im Tragegriff 10 ausgebildeten Entriegelungselements 84 kann die Fixierung des Verriegelungselements 82 gelöst werden, um die beweglichen äußeren Elemente 32a, 33a, 34a zu lösen und die Arme 22, 23, 24 zu entspannen, so dass der Radhalter 2 einfach vom Rad 1 entfernt werden kann.

## Patentansprüche

1. Radhalter (2) zur Befestigung an einem Rad (1), insbesondere an einem Rad eines Kraftfahrzeugs, wobei der Radhalter aufweist:
wenigstens zwei Arme (22, 23, 24), die sich von einem Zentrum (28) des Radhalters in einer radialen Richtung nach außen erstrecken; wobei jeder der Arme jeweils ein stationäres inneres Element (32b, 33b, 34b) und wenigstens ein bewegliches äußeres Element (32a, 33a, 34a) aufweist, das gegenüber dem jeweiligen inneren Element in radialer Richtung beweglich ist; ein zentrales Rotationselement (40), das rotierbar im Zentrum des Radhalters angeordnet ist; und
wenigstens zwei Kopplungselemente (52, 53, 54), die sich jeweils derart zwischen einem der beweglichen Elemente und dem zentralen Rotationselement erstrecken, dass die beweglichen Elemente durch Rotieren des Rotationselements in radialer Richtung bewegbar sind, so dass die Länge der Arme in radialer Richtung durch Bewegen der beweglichen Elemente variierbar ist;
wobei das Rotationselement derart mit einem spiralförmig um die Rotationsachse (30) des Rotationselements ausgebildeten elastischen Element (60) gekoppelt ist, dass das elastische Element eine elastische Kraft auf das Rotationselement ausübt, welche die beweglichen Elemente über das Rotationselement und die Kopplungselemente in Richtung auf das Zentrum des Radhalters drückt.

2. Radhalter nach Anspruch 1, wobei sich die Arme in einer gemeinsamen Ebene erstrecken und wobei das Rotationselement um eine Achse rotierbar ist, die orthogonal zur gemeinsamen Ebene der Arme ausgerichtet ist.

3. Radhalter nach Anspruch 2, wobei sich die Kopplungselemente im Wesentlichen parallel zur gemeinsamen Ebene der Arme erstrecken.

4. Radhalter nach einem der vorangehenden Ansprüche, wobei Rotationselement einen zentralen Bereich und wenigstens zwei Rotationselementarme aufweist, wobei jeder der Kopplungselemente mit einem der Rotationselementarme verbunden ist.

5. Radhalter nach einem der vorangehenden Ansprüche, wobei die Kopplungselemente jeweils schwenkbare mit dem Rotationselement und den beweglichen Elementen verbunden sind.

6. Radhalter nach einem der vorangehenden Ansprüche, wobei der Radhalter drei Arme aufweist.

7. Verfahren des Montierens eines Radhalters (2) nach einem der
vorangehenden Ansprüche an einem Rad (1), insbesondere an einem Rad eines Kraftfahrzeugs, wobei das Verfahren umfasst,
die beweglichen Elemente (32a, 33a, 34a) in radialer Richtung nach außen zu bewegen, um die Armlängen der Arme zu vergrößern;
den Radhalter auf ein Rad, insbesondere ein Rad eines Kraftfahrzeugs, aufzubringen; und
die beweglichen Elemente durch Rotieren des Rotationselements in Richtung auf das Zentrum (28) zu bewegen, um den Radhalter an dem Rad zu fixieren.

8. Verfahren nach Anspruch 7, wobei das Verfahren umfasst, die beweglichen Elemente gegen eine elastische Kraft, die auf das Rotationselement einwirkt, nach außen zu bewegen; und die beweglichen Elemente durch die elastische Kraft in Richtung auf das Zentrum zu bewegen.

## Claims

1. Wheel clamp (2) for fastening to a wheel (1), in particular to a wheel (1) of a motor vehicle, the wheel clamp comprising:
at least two arms (22, 23, 24) extending outward from a center (28) of the wheel clamp (2) in a radial direction; each of the arms (22, 23, 24) respectively having at least one stationary inner element (32b, 33b, 34b) and at least one movable outer element (32a, 33a, 34a) that is movable with respect to the respective stationary inner element (32b, 33b, 34b) in the radial direction;
a central rotary element (40) which is arranged rotatably in the center (28) of the wheel clamp; and
at least two coupling elements (52, 53, 54), respectively extending between one of the movable elements and the central rotary element such that the movable elements are movable in the radial direction by rotating the rotary element such that the lengths of the arms are variable in the radial direction by moving the movable elements;
wherein the rotary element is coupled to an elastic element (60), which is formed in a spiral shape around the axis of rotation (30) of the rotary element, such that the elastic element applies an elastic force to the rotary element which urges the movable elements in the direction toward the center of the wheel clamp via the rotary element and the coupling elements.

2. Wheel clamp according to claim 1,
wherein the arms extend in a common plane and wherein the rotary element is rotatable about an axis which is oriented orthogonally to the common plane of the arms.

3. Wheel clamp according to claim 2,
wherein the coupling elements extend substantially parallel to the common plane of the arms.

4. Wheel clamp according to any of the preceding claims,
wherein the rotary element has a central portion and at least two rotary element arms, each of the coupling elements being connected to one of the rotary element arms.

5. Wheel clamp according to any of the preceding claims,
wherein the coupling elements are each pivotably connected to the rotary element and the movable elements.

6. Wheel clamp according to any of the preceding claims,
wherein the wheel clamp comprises three arms.

7. Method of mounting a wheel clamp (2) according to any of the preceding claims on a wheel (1), in particular a wheel (1) of a motor vehicle, the method comprising the steps of:
moving the movable elements (32, 33, 34) outward in the radial direction in order to increase the arm lengths of the arms;
applying the wheel clamp to a wheel, in particular a wheel of a motor vehicle; and
moving the movable elements in the direction toward the center (28) by rotating the rotary element, so as to fix the wheel clamp to the wheel.

8. Method according to claim 7,
wherein the method comprises moving the movable elements outward against an elastic force acting on the rotating member; and moving the movable elements in the direction toward the center by the elastic force.

## Revendications

1. Support de roue (2) à fixer à une roue (1), en particulier une roue de véhicule automobile, le support de roue présentant :
au moins deux bras (22, 23, 24), qui s'étendent depuis un centre (28) du support de roue vers l'extérieur dans une direction radiale ;
chacun des bras comportant un élément interne stationnaire (32b, 33b, 34b) et au moins un élément externe mobile (32a, 33a, 34a), qui est mobile en direction radiale en face de l'élément interne correspondant ;
un élément rotatif central (40) qui est disposé de manière rotative au centre du support de roue ; et
au moins deux éléments de couplage (52, 53, 54) qui s'étendent respectivement entre un des éléments mobiles et l'élément rotatif central de telle sorte que les éléments mobiles se déplacent en direction radiale lors de la rotation de l'élément rotatif, de telle sorte que la longueur des bras peut varier en direction radiale lors du déplacement des éléments mobiles ;
dans lequel l'élément rotatif est couplé à un élément élastique (60) disposé en forme de spirale autour de l'axe de rotation (30) de l'élément rotatif de telle sorte que l'élément élastique exerce une force élastique sur l'élément rotatif qui presse les éléments mobiles par l'intermédiaire de l'élément rotatif et des éléments de couplage, vers le centre du support de roue.

2. Le support de roue selon la revendication 1, dans lequel les bras s'étendent sur un plan commun et l'élément rotatif peut tourner autour d'un axe qui est orienté de manière orthogonale au plan commun des bras.

3. Le support de roue selon la revendication 2, dans lequel les éléments de couplage s'étendent de manière sensiblement parallèle au plan commun des bras.

4. Le support de roue selon l'une quelconque des revendications précédentes, dans lequel l'élément rotatif présente une zone centrale et au moins deux bras d'élément rotatif, chacun des éléments de couplage étant relié à l'un des bras d'élément rotatif.

5. Le support de roue selon l'une quelconque des revendications précédentes, dans lequel les éléments de couplage sont reliés de manière pivotante avec l'élément rotatif et les éléments mobiles.

6. Le support de roue selon l'une quelconque des revendications précédentes, dans lequel le support de roue présente trois bras.

7. Procédé de montage d'un support de roue (2) selon l'une quelconque des revendications précédentes sur une roue (1), en particulier sur une roue de véhicule automobile, le procédé comprenant
le déplacement des éléments mobiles (32a, 33a, 34a) en direction radiale vers l'extérieur afin d'agrandir la longueur des bras ;
le positionnement du support de roue sur une roue, en particulier une roue de véhicule automobile ; et
le déplacement des éléments mobiles en direction du centre (28) par rotation de l'élément rotatif afin de fixer le support de roue sur la roue.

8. Procédé selon la revendication 7, le procédé comprenant le déplacement des éléments mobiles vers l'extérieur contre une force élastique qui s'exerce sur l'élément rotatif ; et le déplacement des éléments mobiles en direction du centre par la force élastique.
